# EUROPÄISCHE PATENTANMELDUNG

(11) **EP 3 649 904 A1**
(43) Veröffentlichungstag der Anmeldung: **13.05.2020**
(21) Anmeldenummer: 19206734.6
(22) Anmeldetag: 01.11.2019
(51) Int. Cl.: A47J 31/44, A47J 31/46

(54) **VERFAHREN ZUM ERHITZEN INSBESONDERE VON MILCH ODER MILCHSCHAUM, SOWIE EINE EINRICHTUNG ZUR DURCHFÜHRUNG DES VERFAHRENS**

(30) Priorität: 12.11.2018 CH 13922018
(71) Anmelder: Steiner AG Weggis, 6353 Weggis (CH)
(72) Erfinder: STEINER, Adrian, 6353 Weggis (CH)
(74) Vertreter: Luchs, Willi

(57) **Zusammenfassung**

Bei einem Verfahren zum Erhitzen insbesondere von Milch oder Milchschaum, bei dem die Milch oder das Milch/Luftgemisch durch eine Durchlassöffnung (20) und heisser Dampf durch wenigstens eine Dampfleitung (11) quer in diese Durchlassöffnung (20) befördert wird. Letztere und die wenigstens eine quer in diese einmündende Einlassöffnung (19) der Dampfleitung (11), der Dampfdruck in dieser und der Druck in der Durchlassöffnung (20) bei fliessender Milch bzw. Milch/Luftgemisch werden derart aufeinander abgestimmt, dass der heisse Dampf bei der wenigstens einen queren Einlassöffnung (19) in die Durchlassöffnung (20) direkt beim Kontakt mit der durchfliessenden Milch oder dem Milch/Luftgemisch kondensiert. Damit wird die durch die Phasenumwandlung vom Dampf in Kondenswasser entstehende zusätzliche Energie unmittelbar in Wärme in der Milch oder dem Milch/Luftgemisch übertragen.

## Beschreibung

Die Erfindung betrifft ein Verfahren zum Erhitzen von Milch oder Milchschaum, sowie eine Einrichtung zur Durchführung des Verfahrens nach dem Oberbegriff des Anspruchs 1 bzw. des Anspruchs 4.

Bei einer bekannten Vorrichtung gemäss der Druckschrift DE-OS 38 38 235 ist eine Dampfzufuhr mittels einer Dampfeinlassdüse quer in eine längliche Kammer vorgesehen, durch welche in Richtung ihrer Längsachse Milch via eine Kolbenpumpe gefördert wird. Zudem ist ausgangsseitig dieser Kammer eine Drosselstelle vorgesehen, wodurch die Milch ausreichend lang in der Kammer verbleiben soll, um mit dem eingedüsten Dampf in Berührung zu verbleiben, damit der Wärmeaustausch zwischen ihr und dem Dampf verlängert und dabei die angestrebte Milchtemperatur erreicht werde. Dabei sollen mit dem radial oder tangential in die Kammer erfolgenden Dampfeinlass Wirbelströmungen erzeugt werden, um den Wärmeaustausch zu erhöhen. In der Praxis hat sich aber herausgestellt, dass mit dem Erzeugen von Wirbelströmen nicht eine effektiv schnelle Erhitzung der Milch bzw. daraus eine optimale Milchschaumerzeugung erfolgt.

Bei der Erfindung besteht die Aufgabe darin, ein Verfahren bzw. eine Einrichtung zu schaffen, bei dem bei einer effizienten Erhitzung der Milch bzw. des Milch/Luftgemisches ein vorzüglicher Milchschaum erzeugt wird, wenn ein Milch/Luftgemisch durchgelassen wird.

Diese Aufgabe wird erfindungsgemäss nach den Merkmalen des Anspruchs 1 bzw. des Anspruchs 4 gelöst.

Mit dem erfindungsgemässen Verfahren wird einerseits der Dampfdruck in der Dampfleitung und der Druck in der Durchlassöffnung bei fliessender Milch bzw. Milch/Luftgemisch derart eingestellt und andererseits die Durchlassöffnung und eine quer in diese einmündende Einlassöffnung der wenigstens einen Dampfleitung derart dimensioniert, dass der heisse Dampf bei der queren Einlassöffnung in die Durchlassöffnung direkt beim Kontakt mit der durchfliessenden Milch oder dem Milch/Luftgemisch kondensiert.

Damit wird die durch die Phasenumwandlung von Dampf in Wasser entstehende zusätzliche Wärmeenergie unmittelbar in die Milch oder das Milch/Luftgemisch übertragen und es wird eine sehr effiziente Temperaturerhöhung bei einer verhältnismässig geringen Zufuhr von Heissdampf erreicht.

Zur Gewährleistung dieser maximalen Aufheizleistung wird der Dampfdruck in der Dampfleitung vorteilhaft durch ein Druckreduzierventil zur Erzielung eines annähernd konstanten Drucks bei der Einlassöffnung eingestellt.

Bei der erfindungsgemässen Einrichtung für dieses Verfahren ist die Durchlassöffnung für die Milch oder das Milch/Luftgemisch als eine Leitung ausgebildet und die wenigstens eine quer in diese einmündende Einlassöffnung der Dampfleitung ist mit einem annähernd gleichen oder etwas kleineren Innendurchmesser wie derjenige der Durchlassöffnung dimensioniert. Damit ist eine einfache Ausbildung für die Erhitzung von Milch oder von dem Gemisch gegeben, mittels der aber dieses äusserst effiziente Aufwärmen ermöglicht wird.

Die Erfindung sowie weitere Vorteile derselben sind nachfolgend anhand von Ausführungsbeispielen unter Bezugnahme auf die Zeichnung näher erläutert. Es zeigt:
- Fig. 1: ein hydraulisches Schema einer erfindungsgemässen Einrichtung; und
- Fig. 2: einen teilweisen Längsschnitt der Einrichtung nach Fig. 1.

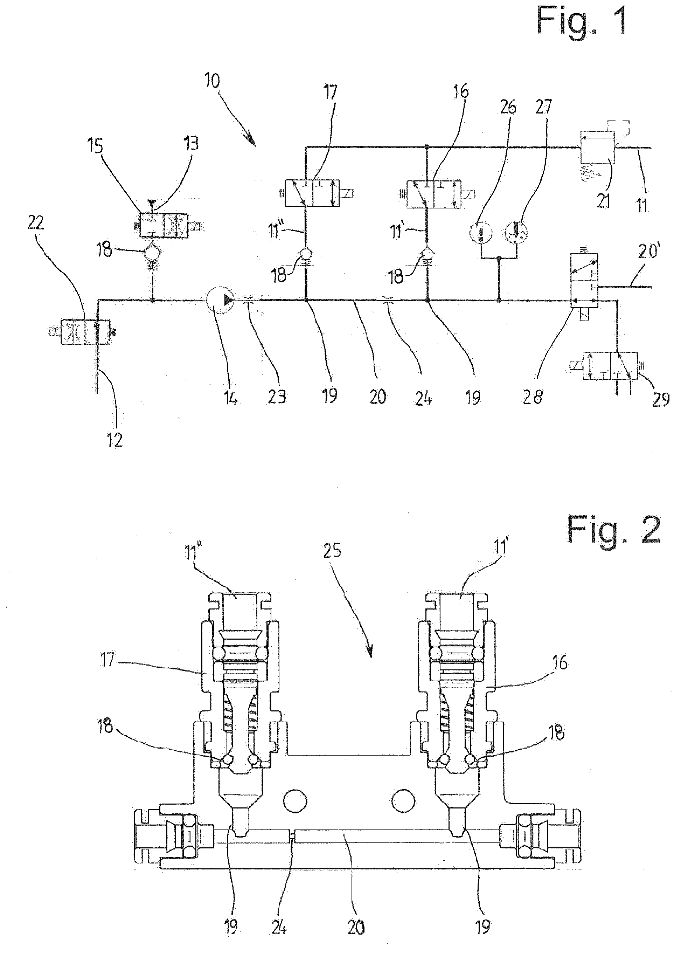

Fig. 1 zeigt eine Einrichtung 10 zum Erhitzen insbesondere von Milch oder Milchschaum mit Wasserdampf. Der Dampf wird vorzugsweise von einem als Dampfquelle vorgesehenen Boiler, der von einem Wasserbehälter oder einer Wasserleitung mittels einer Wasserpumpe aus gespeist wird, was nicht näher gezeigt ist, über eine Dampfleitung 11 zugeführt.

Die Milch ihrerseits wird von einem nicht dargestellten gekühlten Behälter durch eine Ansaugleitung 12 von einer ansteuerbaren Pumpe 14, zum Beispiel eine Zahnradpumpe, angesaugt. Für das Zubereiten von Milchschaum ist der Pumpe 14 eine Luftzufuhrleitung 13 mit einem zuschaltbaren Luftsteuerventil 15 vorgeschaltet. Im Prinzip könnten mit der Einrichtung auch ähnliche Getränke, beispielsweise Schokoladen- oder andere Mischgetränke, als Medium aufgeheizt werden.

Ferner ist bei der erläuterten Einrichtung 10 ein konventioneller Reinigungskreislauf vorgesehen, von dem eine Zuleitung zu- oder ausschaltbares Reinigungsventil 29 gezeigt ist. Durch diesen Kreislauf werden die im Betrieb Milch oder Milchschaum fördernden Leitungen vorteilhaft nach jeder oder einer Anzahl von Benutzungen mit Wasser oder mit einem Reinigungsmittel auf herkömmliche Weise gespült.

Ein Zweiweg-Ventil 28 dient einerseits zum Durchlass der Milch bzw. des Milchschaums durch eine Leitung 20' zu einem nicht näher gezeigten Auslass zum Füllen einer Kaffeetasse oder dergleichen. Dieses Ventil 28 kann geschlossen oder es kann andererseits den Durchlass des Spülwassers öffnen.

Bei dem Verfahren zum Erhitzen der Milch oder des Milchschaums bei eingeschalteter Luftzufuhr wird die Milch oder das Milch/Luftgemisch von der Pumpe 14 durch eine Durchlassöffnung 20 und der heisse Dampf durch die Dampfleitung 11 und nachfolgend durch zwei nebeneinander jeweils separate Leitungen 11', 11" quer in diese Durchlassöffnung 20 befördert. Es sind dabei jeder Leitung 11', 11" ein Schliessventil 16, 17 und ein Rückschlagventil 18 zugeordnet, wobei diese Schliessventile 16, 17 einzeln geöffnet bzw. geschlossen werden können. Die Rückschlagventile 18 auch bei dem Luftsteuerventil 15 verhindern, dass Milch von der Durchlassöffnung 20 in die Dampfleitung fliessen kann.

Erfindungsgemäss werden die Durchlassöffnung 20 und die beiden jeweils quer in diese einmündenden Einlassöffnungen 19 der Dampfleitung 11, der Dampfdruck in der Dampfleitung 11 und der Druck in der Durchlassöffnung 20 bei fliessender Milch bzw. Milch/Luftgemisch derart aufeinander abgestimmt, dass der heisse Dampf bei der oder den queren Einlassöffnungen 19 in die Durchlassöffnung 20 direkt beim Kontakt mit der durchfliessenden Milch oder dem Milch/Luftgemisch kondensiert, so dass die durch die Phasenumwandlung vom Dampf in Kondenswasser entstehende zusätzliche Energie unmittelbar in Wärme in der Milch oder dem Milch/Luftgemisch übertragen wird und damit diese effiziente schnelle Temperaturerhöhung erfolgt.

Mit diesem erfindungsgemässen Verfahren zum Erhitzen der Milch oder dem Milch/Luftgemisch in dieser als Leitung und nicht als Kammer ausgebildeten Durchlassöffnung 20 wird in überraschender Weise durch das Abstimmen mit der in diese führenden Dampfleitung 11, die bei der in diese Durchlassöffnung angeordneten Einlassöffnungen 19 nicht als Düsen ausgebildet sind, eine optimale Wärmeübertragung erzielt.

Der Dampfdruck in der Dampfleitung 11 und der Druck in der Durchlassöffnung 20 bei fliessender Milch bzw. bei fliessendem Milch/Luftgemisch können entsprechend voreingestellt werden, wobei der statische Druck in der Durchlassöffnung 20 von der Durchflussgeschwindigkeit abhängt.

Zur Erhöhung der Erwärmungsieistung auf die durchströmende Milch oder das Milch/Luftgemisch sind die zwei hintereinander geschalteten Einlassöffnungen 19 mit je einer Dampfleitung 11', 11" versehen. Selbstverständlich könnte auch nur eine oder mehr als zwei Einlassöffnungen 19 vorgesehen sein.

Der Dampfdruck in der Dampfleitung bzw. seine Temperatur betragen vorzugsweise zwischen 1.5 und 2.5 bar bzw. zwischen 110 und 140 °C. Je nach den geforderten Leistungsmerkmalen der Einrichtung 10 kann dies entsprechend eingestellt werden.

In der Durchlassöffnung 20 ist eine erste Drossel 23 nach der Pumpe 14 jedoch vor der ersten Einlassöffnung 19 sowie eine zweite Drossel 24 zwischen den beiden Einlassöffnungen 19 angeordnet. Mit diesen Drosseln 23, 24 entsteht eine Verlangsamung der Durchflussgeschwindigkeit der Milch oder des Milch/Luftgemisches, damit sich bei dem Milch/Luftgemisch, welches bereits nach dem Pumpenaustritt eine schaumige Konsistenz aufweist, die darin enthaltenden Luftbläschen durchschnittlich kleinere Durchmesser bilden als wenn keine Drossel integriert wäre. Diese beiden nacheinander angeordneten Drosseln 23, 24 sind mit einem unterschiedlichen Drosselungsgrad versehen, vorzugsweise zwischen 20% und 60% des Innendurchmessers der Einlassöffnung 20. Der Drosselungsgrad der zweiten Drossel 24 ist mit Vorteil kleiner als derjenige der vorderen Drossel 23.

Aufgrund der Verwendung üblicherweise eines Boilers als Dampfquelle und den damit verbundenen betrieblichen Druckschwankungen des darin erzeugten Dampfes wird in der mit dem Boiler verbundenen Dampfleitung 11 durch ein Druckreduzierventil 21 zwecks Druckausgleich ein jederzeit annähernd konstanter Dampfdruck bei den Einlassöffnungen 19 erzielt. Dieses Druckreduzierventil 21 verringert bzw. erhöht die Dampfdurchlassmenge je nach anstehendem Druck, so dass ein annähernd konstanter Druck am Ausgang dieses Ventils vorliegt.

Zudem befindet sich in der Ansaugleitung 12 vorzugsweise zwischen dem Milchbehälter und der Luftzufuhrleitung 13 ein Umschaltventil 22, welches beim Durchlass von Milch geöffnet wird, hingegen in der anderen Schaltstellung, wenn Milchschaum erzeugt werden soll, ist es als Drosselventil ausgebildet. Damit wird der sinkende Füllstand im Milchbehälter ausgeglichen, d.h. wenn der Milchbehälter aufgefüllt ist, besteht bekanntlich ein höherer statischer Druck am unteren Ende der Ansaugleitung 12 oberhalb des Behälterbodens. Beim Entleeren des Behälters sinkt dieser Druck und es wird entsprechend bei gleich bleibender Ansaugleistung durch die Pumpe 14 mengenmässig weniger Milch angesaugt. Durch dieses Drosselventil wird aber bei jedem Füllstand annähernd gleich viel Milch gepumpt, weil dann dieser vom Füllstand herrührende Druckunterschied kaum mehr ins Gewicht fällt.

Das Luftsteuerventil 15, bei dem die Menge der Luftzufuhr gesteuert oder geregelt wird, wird im Rahmen der Erfindung ein verstellbares Nadelventil als Stellgrössenelement verwendet. Es könnte jedoch auch ein Proportionalventil oder dergleichen benutzt werden.

Mit diesen verwendeten Ventilen 15, 21 22 wird zusätzlich sichergestellt, dass konstante Verhältnisse bei der Erhitzung des durchlassenden Mediums vorliegen und dass damit auch die Milchschaumqualität stets sehr vorzüglich erzeugt wird.

Bei der Einrichtung 10 ist erfindungsgemäss die Durchlassöffnung 20 für die Milch oder das Milch/Luftgemisch als eine Leitung und nicht kammerförmig ausgebildet und die wenigstens eine quer in diese einmündende Einlassöffnung 19 der Dampfleitung 11 ist mit einem annähernd gleichen oder etwas kleineren Innendurchmesser wie derjenige der Durchlassöffnung 20 dimensioniert.

Zweckmässigerweise betragen die Innendurchmesser der Durchlassöffnung 20 bzw. der Einlassöffnungen 19 jeweils zwischen 2.0 mm und 4.0 mm. Diese Bemessung der Innendurchmesser richtet sich nach der Mengenleistung des durchzulassenden Mediums. Die Längsachsen der Durchlassöffnung 20 und der Dampfleitung 11 bei der Einlassöffnung 19 kreuzen sich zumindest annähernd. Damit überdeckt der Querschnitt der Einlassöffnung 19 den quer zu ihr verlaufenden Durchgang der Durchlassöffnung 20.

Es sind ferner noch ein Thermometer 26 und eine Messeinrichtung 27 zum Ermitteln der Milchschaumkonsistenz angedeutet, welche nach oder in der Durchlassöffnung 20 des erzeugten Milchschaums integriert sind. Mit dem Thermometer 26 wird die Temperatur der erhitzten Milch oder des erzeugten Milchschaums während dem Fördern gemessen.

Mit diesen Messungen bzw. Ermittlung der Milchschaumkonsistenz kann eine Überwachung derselben erfolgen und es könnten sogar Parameter, wie der Luftmengenanteil, die Pumpenleistung, der Dampfdruck oder anderes angepasst und die Drücke bei der Durchlassöffnung 20 bzw. den Einlassöffnungen 19 verändert und es würde damit eine Regelung für die Erzielung von vorgegebenen Sollwerten ermöglicht.

Gemäss Fig. 2 ist für die Durchlassöffnung 20 und die Einlassöffnungen 19 mit den Ventilen ein als Modul ausgestalteter Hydraulikblock 25 gebildet. Mit diesem wird eine einfache Montage bzw. Demontage bei einer allfälligen Reparatur ermöglicht.

Dieses erfindungsgemässe Verfahren bzw. diese Einrichtung für diese Milcherhitzung kann sowohl bei einem Milchmodul als separate Einheit oder in einer Kaffeemaschine angewendet werden bzw. integriert sein, insbesondere zur Erzeugung von Cappuccino oder andern heissen Milchgetränken.

## Patentansprüche

1. Verfahren zum Erhitzen insbesondere von Milch oder Milchschaum, bei dem die Milch oder das Milch/Luftgemisch durch eine Durchlassöffnung (20) und heisser Dampf durch wenigstens eine Dampfleitung (11) quer in diese Durchlassöffnung (20) befördert wird, **dadurch gekennzeichnet, dass**
die Durchlassöffnung (20) und die wenigstens eine quer in diese einmündende Einlassöffnung (19) der Dampfleitung (11), der Dampfdruck in dieser und der Druck in der Durchlassöffnung (20) bei fliessender Milch bzw. Milch/Luftgemisch derart aufeinander abgestimmt werden, dass der heisse Dampf bei der wenigstens einen queren Einlassöffnung (19) in die Durchlassöffnung (20) direkt beim Kontakt mit der durchfliessenden Milch oder dem Milch/Luftgemisch kondensiert, so dass die durch die Phasenumwandlung vom Dampf in Kondenswasser entstehende zusätzliche Energie unmittelbar in Wärme in der Milch oder dem Milch/Luftgemisch übertragen wird.

2. Verfahren nach Anspruch 1, **dadurch gekennzeichnet, dass**
der Dampfdruck in der Dampfleitung (11) durch ein Druckreduzierventil (21) zwecks Druckausgleich mit einem annähernd konstanten Dampfdruck bei der Einlassöffnung (13) eingestellt wird.

3. Verfahren nach Anspruch 1 oder 2, **dadurch gekennzeichnet, dass**
der Dampfdruck in der Dampfleitung (11) vorzugsweise zwischen 1.5 und 2.5 bar und dabei die Temperatur des Dampfs vorzugsweise zwischen 110 und 140 °C betragen.

4. Einrichtung zur Durchführung des Verfahrens nach einem der vorhergehenden Ansprüche 1 bis 3, mit einer Durchlassöffnung (20) insbesondere für die Milch oder das Milch/Luftgemisch und wenigstens einer quer in diese einmündenden Einlassöffnung (19) einer Dampfleitung (11) für das Zuführen von heissem Dampf, **dadurch gekennzeichnet, dass**
die Durchlassöffnung (20) für die Milch oder das Milch/Luftgemisch als eine Leitung ausgebildet ist und die wenigstens eine quer in diese einmündende Einlassöffnung (19) der Dampfleitung (11) mit einem annähernd gleichen oder etwas kleineren Innendurchmesser wie derjenige der Durchlassöffnung (20) dimensioniert ist.

5. Einrichtung nach Anspruch 4, **dadurch gekennzeichnet, dass**
die Innendurchmesser der Durchlassöffnung (20) bzw. der Einlassöffnung (19) jeweils zwischen annähernd 2.0 mm und 4.0 mm betragen.

6. Einrichtung nach Anspruch 4 oder 5, **dadurch gekennzeichnet, dass**
sich die Längsachsen der Durchlassöffnung (20) und der Dampfleitung (11) bei der Einlassöffnung (19) zumindest annähernd kreuzen.

7. Einrichtung nach einem der vorhergehenden Ansprüche 4 bis 6, **dadurch gekennzeichnet, dass**
zur Erhöhung der Erwärmungsleistung auf die durchströmende Milch oder das Milch/Luftgemisch zwei nacheinander geschaltete quer in diese Durchlassöffnung (20) einmündende Einlassöffnungen (19) mit je einer Dampfleitung (11', 11") vorgesehen sind.

8. Einrichtung nach einem der vorhergehenden Ansprüche 4 bis 7, **dadurch gekennzeichnet, dass**
in der Durchlassöffnung (20) vor und/oder nach der jeweiligen in diese einmündenden Einlassöffnung (19) eine Drossel (23, 24) enthalten ist.

9. Einrichtung nach einem der vorhergehenden Ansprüche 4 bis 8, **dadurch gekennzeichnet, dass**
ein Boiler als Dampfquelle für die Erzeugung des heissen Wasserdampfs vorgesehen ist, bei welcher die Dampfleitung (11) anschliessbar ist, in der wenigstens ein Druckreduzierventil (21) zwecks Druckausgleich zur Erzielung eines annähernd konstanten Drucks in dieser Dampfleitung (11) vor der Einlassöffnung (19) integriert ist.

10. Einrichtung nach einem der vorhergehenden Ansprüche 4 bis 9, **dadurch gekennzeichnet, dass**
in der vom Milchbehälter ausgehenden Ansaugleitung (12) ein Umschaltventil (22) enthalten ist, welches in der einen Schaltstellung für den Durchlass von Milch geöffnet ist, hingegen in der anderen Schaltstellung als Drosselventil ausgebildet ist, wenn Milchschaum erzeugt werden soll, damit im Betrieb der sinkende Füllstand im Milchbehälter ausgeglichen werden kann.

11. Einrichtung nach einem der vorhergehenden Ansprüche 4 bis 10, **dadurch gekennzeichnet, dass**
ein Luftsteuerventil (15) in einer in die Ansaugleitung (12) für die Milch führenden Luftzufuhrleitung (13) angeordnet ist, welches ein verstellbares Nadelventil als Stellgrössenelement aufweist.
